# EUROPEAN PATENT SPECIFICATION

(11) **EP 2 243 589 B1**
(45) Date of publication and mention of the grant of the patent: **01.02.2012**
(21) Application number: 10003903.1
(22) Date of filing: 13.04.2010
(51) Int. Cl.: B23K 35/22, B23K 35/28, B32B 15/01, C22C 21/00, C22C 21/02, F28F 1/00, F28F 9/18, F28F 19/06, F28F 21/00, F28F 21/08, B23K 1/19

(54) **Aluminum alloy clad sheet for heat exchangers and method of producing the same**
Plattiertes Aluminiumlegierungsblech für Wärmetauscher und Herstellungsverfahren dafür
Tôle plaquée en alliage d'aluminium pour échangeurs thermiques et son procédé de production

(30) Priority: 21.04.2009 JP 2009102821
(43) Date of publication of application: 27.10.2010
(73) Proprietor: Sumitomo Light Metal Industries, Ltd., Minato-ku Tokyo 105-8601 (JP)
(72) Inventor: Hisatomi, Yuji, Tokyo 105-8601 (JP); Yamashita, Naoki, Tokyo 105-8601 (JP); Itoh, Yasunaga, Tokyo 105-8601 (JP)
(74) Representative: Flaccus, Rolf-Dieter

(56) References cited:
- EP-A2- 1 484 571
- JP-A- 2004 225 061
- JP-A- 2005 307 251
- JP-A- 2005 314 719
- JP-A- 2007 178 062
- JP-A- 2008 303 405

## Description

### BACKGROUND OF THE INVENTION

The present invention relates to an aluminum alloy clad sheet for heat exchangers that exhibits excellent brazability and outer-side corrosion resistance, and is suitably used as a tube material or a tank or header material for an aluminum alloy heat exchanger that is produced by inert-gas brazing using a fluoride flux, and also relates to a method of producing the same.

An aluminum alloy that is lightweight and exhibits excellent thermal conductivity is normally used for automotive heat exchangers (e.g., evaporator or condenser). A heat exchanger is normally produced by forming a refrigerant (i.e., working fluid) tube by bending a sheet material or layering sheet materials formed by press working, assembling a member such as a fin material with the refrigerant tube to form a given structure, and brazing the components in an inert gas atmosphere using a fluoride flux.

In recent years, a reduction in weight has been desired for automotive heat exchangers along with a reduction in weight of automobiles. Therefore, the thickness of the heat exchanger material has been reduced. This makes it necessary to increase the strength of a sheet material used to form a refrigerant tube, or provide a thin material with formability, brazability, and corrosion resistance.

For example, when forming a refrigerant tube by press-working a sheet material, an O-temper material is normally used to ensure formability (elongation). However, when the material is clad with a filler metal, the filler metal erodes the core material in the low-processed area during brazing. This phenomenon significantly occurs when using a thin material so that a sound brazed state may not be obtained. An H-temper thin material is normally used for a refrigerant tube of a radiator or the like. In this case, erosion that occurs in the low-processed area during brazing is suppressed. However, since the material has an elongation of about 1 to 2%, it is difficult to press-work the material.

The outer side of an evaporator is exposed to a corrosive environment due to dew condensation water produced during use, and the outer side of a condenser is exposed to a corrosive environment during travel due to road splash that contains a road salt, for example. If the refrigerant tube is perforated at an early stage due to corrosion from the outer side, the refrigerant leaks so that the function of the heat exchanger is impaired. Therefore, the outer side of the refrigerant tube is provided with an anti-corrosive treatment to increase the life of the heat exchanger.

For example, a flat tube produced by forming a sheet material that is clad with an Al-Zn alloy (sacrificial anode material) may be used as the refrigerant tube, or a multi-port extruded tube may be used as the refrigerant tube. However, a heat exchanger generally has a structure in which a fin is bonded to the outer side of the refrigerant tube. When using the above method, since a filler metal is not provided on the outer side of the refrigerant tube, it is necessary to use a fin material that is clad with a filler metal. In this case, the self-corrosion resistance of the fin material may decrease due to the filler metal that remains on the surface of the fin, or the production cost of the heat exchanger may increase since the production cost of the clad fin material is higher than that of the bare fin.

When using a bare material for the fin that is bonded to the outer side of the refrigerant tube, the self-corrosion resistance of the fin can be improved. Moreover, the performance of the heat exchanger can be improved by utilizing a highly conductive material, and cost can be reduced as compared with the case of using a clad fin material. In this case, since it is necessary to provide a filler metal on the outer side of the refrigerant tube, a filler metal powder may be applied to the surface of the Al-Zn alloy, or a sheet material that is clad with an Al-Si alloy filler metal that contains Zn may be used. When applying a filler metal powder to the surface of the Al-Zn alloy, however, the production cost of the heat exchanger increases since the filler metal powder is expensive. When using a sheet material that is clad with an Al-Si alloy filler metal that contains Zn, since the molten filler metal that contains Zn flows during brazing, the amount of Zn that remains on the outer side of the refrigerant tube after brazing is not sufficient to provide a sacrificial anode material, the refrigerant tube may not exhibit sufficient corrosion resistance, or the molten filler metal that contains Zn may flow to the joint and cause preferential corrosion of the joint.

A method that forms a filler metal having low fluidity by adding Si at a low concentration to ensure brazability with a joint material has been known. For example, Si is added to an Al-Zn sacrificial anode material with which the outer side of the refrigerant tube is clad at a concentration lower than the Si concentration of an Al-Si alloy filler metal, and a bare fin material is bonded by melting part of the sacrificial anode material. A phenomenon in which Zn contained in the sacrificial anode material flows during brazing is suppressed by reducing the amount of liquid phase as compared with an Al-Si alloy filler metal so that a sufficient amount of Zn remains on the outer side of the refrigerant tube after brazing to provide a sacrificial anode effect.

When using the above method, however, a sufficient amount of liquid phase for bonding the bare fin material is not obtained if the amount of Si is inappropriate. Moreover, self-corrosion resistance decreases if an inappropriate element is added in addition to Si. The solidification structure formed by brazing has a primary crystal and a eutectic. Since the potential of the eutectic is lower than that of the primary crystal, preferential corrosion of the eutectic occurs so that the primary crystal that functions as a sacrificial anode material falls off at an early stage. As a result, corrosion resistance decreases.

JP-A-2004-225061, JP-A-2005-16937, JP-A-2005-307251, JP-A-2005-314719, JP-A-2007-178062, disclose related-art technologies.

JP2008303405 discloses an aluminum alloy material for heat-exchanger header plate, with aluminium-silicon or aluminium-silicon-zinc type aluminium alloy brazing material and aluminium-silicon-manganese type aluminium alloy brazing material coated on both sides of a core material consisting of Mn:0.8-2.0%, Cu:0.05-1.5%, Fe:0.1-1.0%, Zn:0.01-2.0%, and has the composition which consists of remainder Al and an unavoidable impurity wherein the aluminium cladding covers the surface on the refrigerant side.

### SUMMARY OF THE INVENTION

The present invention was conceived as a result of conducting tests and studies on the relationship between the composition of the outer-side cladding material, the brazability of the outer-side cladding material and the bare fin material, and the sacrificial anode properties of the outer-side cladding material in order to solve the above problems to obtain outer-side brazability and outer-side corrosion resistance. An object of the present invention is to provide an aluminum alloy clad sheet for heat exchangers that exhibits excellent brazability and outer-side corrosion resistance, and is suitably used as a member (particularly a tube material or a tank or header material) of an aluminum alloy heat exchanger that is produced by inert-gas brazing using a fluoride flux. Another object of the present invention is to provide a method of producing an aluminum alloy clad sheet for heat exchangers that is an H-temper material and exhibits elongation sufficient for hard working (e.g., press working).

According to one aspect of the present invention, there is provided an aluminum alloy clad sheet that is used to form a refrigerant passage of a heat exchanger, the aluminum alloy clad sheet comprising a core material, a cladding material 1, and a cladding material 2, one side and the other side of the core material being respectively clad with the cladding material 1 and the cladding material 2, the core material comprising 0.5 to 1.2% (mass%, hereinafter the same) of Si, 0.2 to 1.0% of Cu, and 1.0 to 1.8% of Mn, with the balance being Al and unavoidable impurities, the cladding material 1 comprising 3 to 6% of Si, 2 to 8% of Zn, and at least one of 0.3 to 1.8% of Mn and 0.05 to 0.3% of Ti, with the balance being Al and unavoidable impurities, and the cladding material 2 comprising 6 to 13% of Si, with the balance being Al and unavoidable impurities, the cladding material 1 being positioned opposite to the refrigerant passage during use.

In the above aluminum alloy clad sheet, the core material may further comprise at least one of 0.3% or less of Cr and 0.3% or less of Zr.

In the above aluminum alloy clad sheet, the core material may further comprise 0.5% or less of Mg.

In the above aluminum alloy clad sheet, the cladding material 1 may further comprise 0.005 to 0.05% of Sr.

In the above aluminum alloy clad sheet, the cladding material 1 may further comprise at least one of 0.3% or less of Cr and 0.3% or less of Zr.

In the above aluminum alloy clad sheet, the cladding material 1 may further comprise at least one of 0.041 to 0.1 % of In and 0.001 to 0. 1 % of Sn.

In the above aluminum alloy clad sheet, the cladding material 1 may have an Ni content of less than 0.05%.

In the above aluminum alloy clad sheet, the cladding material 2 may further comprise 0.005 to 0.05% of Sr.

In the above aluminum alloy clad sheet, the cladding material 2 may further comprise 0.1 to 0.5% of Cu.

According to another aspect of the present invention, there is provided a method of producing the above aluminum alloy clad sheet, the method comprising: homogenizing an ingot of an aluminum alloy that forms the core material at 550 to 620°C for 2 to 20 hours; cladding the ingot with an aluminum alloy that forms the cladding material 1 and an aluminum alloy that forms the cladding material 2; hot-rolling the resulting product; cold-rolling the hot-rolled product, the hot-rolled product being heated at 300 to 400°C for 2 to 5 hours during the cold-rolling so that the core material has a recrystallized structure; cold-rolling the resulting product to a final thickness at a rolling reduction rate of 10 to 40%; and subjecting the resulting product to a recovery treatment by heating the product at 200 to, 450°C for 2 to 5 hours.

According to another aspect of the present invention, there is provided an aluminum alloy clad sheet that is used to form a refrigerant passage of a heat exchanger, the aluminum alloy clad sheet comprising a core material and a cladding material 1, one side of the core material being clad with the cladding material 1, the core material comprising 0.5 to 1.2% of Si, 0.2 to 1.0% of Cu, and 1.0 to 1.8% of Mn, with the balance being A1 and unavoidable impurities, and the cladding material 1 comprising 3 to 6% of Si, 2 to 8% of Zn, and at least one of 0.3 to 1.8% of Mn and 0.05 to 0.3% of Ti, with the balance being A1 and unavoidable impurities, the cladding material 1 being positioned opposite to the refrigerant passage during use.

In the above aluminum alloy clad sheet, the core material may further comprise at least one of 0.3% or less of Cr and 0.3% or less of Zr.

In the above aluminum alloy clad sheet, the core material may further comprise 0.5% or less of Mg.

In the above aluminum alloy clad sheet, the cladding material 1 may further comprise 0.005 to 0.05% of Sr.

In the above aluminum alloy clad sheet, the cladding material 1 may further comprise at least one of 0.3% or less of Cr and 0.3% or less of Zr.

In the above aluminum alloy clad sheet, the cladding material 1 may further comprise at least one of 0.001 to 0.1% of In and 0.001 to 0.1% of Sn.

In the above aluminum alloy clad sheet, the cladding material 1 may have an Ni content of less than 0.05%.

According to a further aspect of the present invention, there is provided a method of producing the above aluminum alloy clad sheet, the method comprising: homogenizing an ingot of an aluminum alloy that forms the core material at 550 to 620°C for 2 to 20 hours; cladding the ingot with an aluminum alloy that forms the cladding material 1; hot-rolling the resulting product; cold-rolling the hot-rolled product, the hot-rolled product being heated at 300 to 400°C for 2 to 5 hours during the cold-rolling so that the core material has a recrystallized structure; cold-rolling the resulting product to a final thickness at a rolling reduction rate of 10 to 40%; and subjecting the resulting product to a recovery treatment by heating the product at 200 to 450°C for 2 to 5 hours.

The present invention thus provides an aluminum alloy clad sheet for heat exchangers that exhibits excellent brazability and outer-side corrosion resistance, and is used as a member of an aluminum alloy heat exchanger that is produced by inert-gas brazing using a fluoride flux. The present invention thus also provides a method of producing an aluminum alloy clad sheet for heat exchangers that is an H-temper material and exhibits elongation sufficient for hard working (e.g., pressing). The aluminum alloy clad sheet according to the present invention may be suitably used as a tube material or a tank or header material.

### BRIEF DESCRIPTION OF THE DRAWINGS

FIG. 1 is a schematic view showing a three-layered clad sheet according to the present invention.
FIG 2 is a schematic view showing a two-layered clad sheet according to the present invention.
FIG 3 is a schematic view showing a refrigerant tube formed using a three-layered clad sheet according to the present invention.
FIG 4 is a schematic view showing another refrigerant tube formed using a three-layered clad sheet according to the present invention.
FIG. 5 is a schematic view showing a refrigerant tube formed using a two-layered clad sheet according to the present invention.
FIG. 6 is a view showing the state of an inverted T-shaped test specimen used for a brazing test before brazing.
FIG. 7 is a view showing the state of an inverted T-shaped test specimen used for a brazing test after brazing.
FIG. 8 is a view showing the state of a specimen used for a corrosion test before brazing.

### DESCRIPTION OF EXEMPLARY EMBODIMENTS

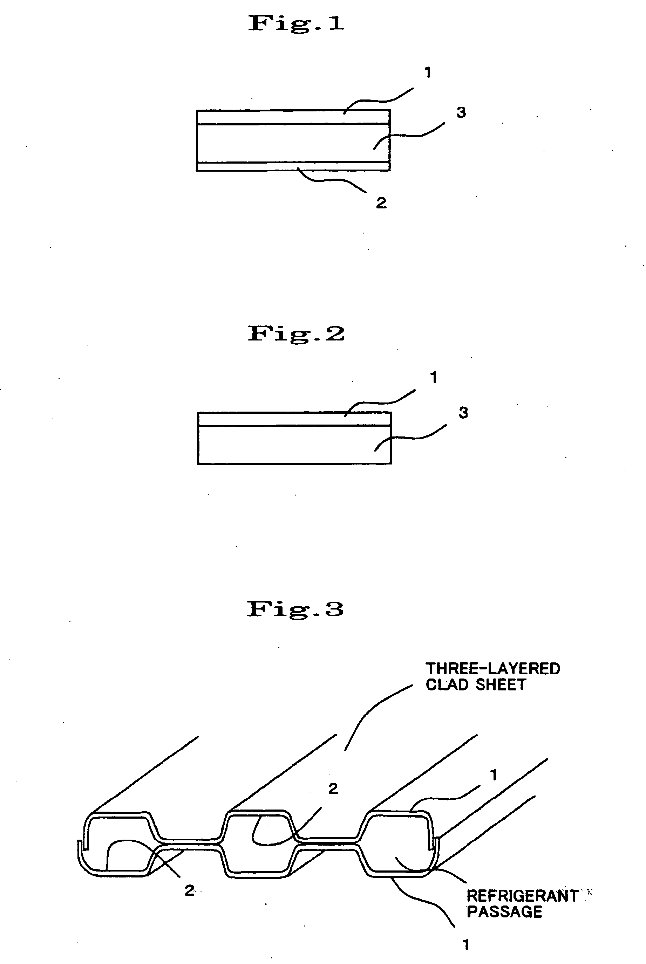

As shown in FIG 1, a three-layered aluminum alloy clad sheet according to the present invention has a configuration in which one side of a core material 3 is clad with a cladding material 1, and the other side of the core material 3 is clad with a cladding material 2. As shown in FIG 3, each clad sheet is formed so that the cladding material 1 forms a convex surface, and the cladding material 2 forms a concave surface. The clad sheets are assembled so that the concave surfaces face each other, and brazed to form a refrigerant tube. Therefore, the cladding material 1 comes in contact with air, and the cladding material 2 comes contact with a refrigerant during use so that heat is exchanged between the refrigerant and the air. A corrugated bare fin may be disposed in the refrigerant passage.

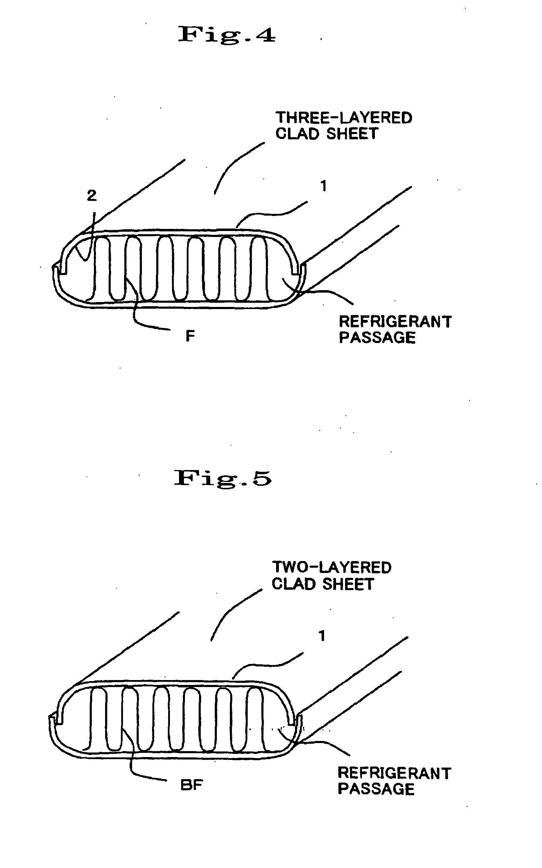

FIG 4 shows another configuration of a refrigerant tube. Specifically, each clad sheet is formed so that the cladding material 1 forms a convex surface, and the cladding material 2 forms a concave surface. A bare fin F is corrugated and disposed to face the cladding material 2. The clad sheets are assembled so that the concave surfaces face each other, and brazed to form a refrigerant tube. The cladding material 1 comes in contact with air, and the cladding material 2 comes in contact with a refrigerant during use so that heat is exchanged between the refrigerant and the air.

As shown in FIG 2, a two-layered aluminum alloy clad sheet according to the present invention has a configuration in which one side of the core material is clad with the cladding material 1. As shown in FIG 5, each clad sheet is formed so that the cladding material 1 forms a convex surface, and the core material forms a concave surface. A brazing fin BF of which each side is clad with a filler metal is corrugated and disposed to face the core material. The clad sheets are assembled so that the concave surfaces face each other, and brazed to form a refrigerant tube. In this case, the cladding material 1 and the core material can be brazed by disposing the cladding material 1 and the core material to overlap. The cladding material 1 comes in contact with air, and the core material comes in contact with a refrigerant during use so that heat is exchanged between the refrigerant and the air.

The effects of each alloy component of the aluminum alloy clad sheet according to the present invention, and the reasons for the limitation to the content range of each alloy component are described below.

### (Core material)

### Si, Cu, and Mn:

The strength of the core material is improved by adding Si, Cu, and Mn to the core material. The Si content is preferably 0.5 to 1.2%, the Cu content is preferably 0.2 to 1.0%, and the Mn content is preferably 1.0 to 1.8%. If the Si content, the Cu content, or the Mn content is less than the lower limit, the strength of the core material may not be sufficiently improved. If the Si content or the Cu content exceeds the upper limit, the melting point of the core material may decrease. If the Mn content exceeds the upper limit, the rollability of the core material may decrease. The Si content is more preferably 0.65 to 1.1 %, the Cu content is more preferably 0.2 to 0.7%, and the Mn content is more preferably 1.1 to 1.7%.

### Cr and Zr:

The crystal grains of the core material are coarsened by adding Cr and Zr to the core material. This suppresses a situation in which a molten filler metal permeates the crystal grain boundaries during brazing so that erosion occurs. The Cr content is preferably 0.3% or less, and the Zr content is preferably 0.3% or less. If the Cr content or the Zr content exceeds 0.3%, coarse crystallized products may be produced during casting so that it may be difficult to produce a sound sheet material.

### Mg:

The strength of the core material is improved by adding Mg to the core material.
However, Mg diffuses from the core material to the filler metal during brazing, and reacts with a fluoride flux applied to the surface of the core material to form a compound having a high melting point. This decreases the activity of the flux so that brazability decreases. The Mg content is preferably 0.5% or less. If the Mg content exceeds 0.5%, the above phenomenon may occur to a large extent. The Mg content is more preferably 0.3% or less.

The core material normally contains about 0.1 to 0.2% of Fe as impurities. The Fe content may be reduced to less than 0.1% in order to improve the brazability of the core material. Alternatively, 1.0% or less of Fe may be added to the core material in order to improve the strength of the core material. The effects of the present invention are not impaired even if the cladding material 2 contains 0.3% or less of V, Mo, or Ni, or 0.1% or less of Pb, Li, Ca, or Na. 0.1 % or less of B may be added to the core material in order to prevent oxidation. 0.1% or less of Sr may also be added to the core material. Sr diffuses into a filler metal to promote refinement of the solidification structure of the filler metal.

### Cladding material 1 (outer-side cladding material)

### Si:

Si contained in the cladding material 1 causes a small amount of liquid phase to be produced in the cladding material 1 during brazing so that a bare fin material can be bonded to the outer side of the clad sheet. On the other hand, most of the Si is not melted and remains on the surface of the cladding material 1. Si remains on the outer side of the clad sheet after brazing as a sacrificial anode layer that contains zinc so that the corrosion resistance of the clad sheet can be improved. The Si content is preferably 3 to 6%. If the Si content is less than 3%, a sufficient liquid phase may not be produced so that a sound fillet may not be formed at the joint with a bare fin material. If the Si content exceeds 6%, most of the cladding material 1 may be melted so that Zn contained in the cladding material 1 may also flow during brazing. As a result, the cladding material 1 may not function as a sacrificial anode material. The Si content is more preferably 3.5 to 5.5%.

### Zn:

Zn contained in the cladding material 1 diffuses into the core material during brazing to form a Zn concentration gradient in the core material along the thickness direction. Therefore, the potential of the cladding material 1 becomes lower than that of the core material so that the cladding material 1 functions as a sacrificial anode material to suppress the progress of corrosion in the thickness direction. In the present invention, Si is added to the cladding material 1. Si increases the potential of the cladding material 1 upon dissolution to counterbalance the potential decreasing effect of Zn. Cu contained in the core material diffuses into the cladding material 1 during brazing. Cu also increases the potential of the cladding material 1 upon dissolution to counterbalance the potential decreasing effect of Zn. Since Zn is contained in the liquid phase that is produced due to Si, the amount of the remaining Zn decreases. The Zn content is preferably 2 to 8%. If the Zn content is less than 2%, a sufficient potential decreasing effect may not be obtained. If the Zn content exceeds 8%, a sufficient potential decreasing effect is obtained, but a fillet formed at a joint may be corroded at an early stage. The Zn content is more preferably 3 to 7%.

### Mn:

In the present invention, part of Si contained in the cladding material 1 is melted during brazing to form a solidification structure. Therefore, the cladding material 1 (outer-side cladding material) contains a primary crystal a phase and a eutectic phase. Since the potential of the eutectic is lower than that of the primary crystal, the eutectic is preferentially corroded as compared with the primary crystal. If the eutectic is corroded, the primary crystal is isolated and falls off. If the primary crystal that has a sacrificial anode effect falls off, the sacrificial anode material disappears without exerting the sacrificial anode effect. Therefore, the core material is corroded at an early stage so that perforation corrosion occurs. In order to prevent the above phenomenon, it is necessary to coarsen the primary crystal so that the primary crystal does not fall off even if the eutectic is preferentially corroded, and form a low-potential area in the primary crystal. Since the primary crystal is coarsened by adding Mn to the outer-side cladding material, a situation in which the primary crystal falls off can be prevented. Moreover, an Al-Mn-Si compound is formed in the primary crystal, and an Mn/Si-deficient layer formed around the Al-Mn-Si compound serves as a low-potential area, so that preferential corrosion of the eutectic phase is relatively suppressed. The Mn content is preferably 0.3 to 1.8%. If the Mn content is less than 0.3%, the effect may be insufficient. If the Mn content exceeds 1.8%, the Si concentration in the outer-side cladding material may significantly decrease due to formation of an Al-Mn-Si compound so that the amount of liquid phase produced may decrease. The Mn content is more preferably 0.3 to 1.3%.

### Ti:

Ti contained in the cladding material 1 coarsens the primary crystal in the same manner as Mn. This prevents a situation in which the primary crystal falls off. The Ti content is preferably 0.05 to 0.3%. If the Ti content is less than 0.05%, the effect is insufficient. If the Ti content exceeds 0.3%, coarse crystallized products are produced so that the bondability of the outer side may be impaired.

### Sr:

The Si particles contained in the cladding material 1 are finely dispersed by adding Sr to the cladding material 1 so that liquid phases of a molten filler metal produced during brazing are easily bonded. Since the uniformity of the liquid phase is thus improved, a uniform molten state is obtained. As a result, the thickness of the outer filler metal layer that remains after brazing becomes uniform so that the corrosion resistance of the cladding material 1 is improved. If the Sr content is less than 0.005%, coarse Si particles are locally distributed so that the area that contains the coarse Si particles is significantly melted during brazing. As a result, the sacrificial layer may locally decrease or disappear so that the corrosion resistance of the cladding material 1 may decrease to a large extent. If the Sr content exceeds 0.05%, coarse Al-Si-Sr compounds may be produced so that the corrosion resistance of the cladding material 1 may decrease.

### Cr and Zr:

The primary crystal is coarsened by adding Cr and Zr to the cladding material 1.
This prevents a situation in which the primary crystal falls off. The Cr content is preferably 0.3% or less, and the Zr content is preferably 0.3% or less. If the Cr content or the Zr content exceeds 0.3%, coarse crystallized products may be produced so that the bondability of the outer side may be impaired.

### In and Sn:

A potential decreasing effect is achieved by adding a small amount of In and Sn.
Therefore, the potential of the outer-side cladding material becomes lower than that of the core material by adding In and Sn to the cladding material 1 so that a sacrificial anode effect can be obtained. The In content is preferably 0.001 to 0.1%, and the Sn content is preferably 0.001 to 0.1%. If the In content or the Sn content is less than 0.001%, the effect may be insufficient. If the In content or the Sn content exceeds 0.1%, the self-corrosion resistance of the cladding material 1 may decrease. The In content and the Sn content are more preferably 0.01 to 0.04%.

### Ni:

An Al-Ni compound is formed when the cladding material 1 (outer-side cladding material) contains Ni. Since the Al-Ni compound functions as a cathode, the self-corrosion resistance of the outer-side cladding material (sacrificial anode material) decreases so that corrosion is promoted (i.e., perforation corrosion occurs at an early stage). The above phenomenon significantly occurs when the Ni content is 0.05% or more. Therefore, the Ni content is preferably less than 0.05%.

The cladding material 1 normally contains about 0.1 to 0.2% of Fe as impurities. The Fe content may be reduced to less than 0.1 % in order to improve the brazability of the cladding material 2. Alternatively, 1.0% or less of Fe may be added to the cladding material 1 in order to improve the strength of the cladding material 2. The effects of the present invention are not impaired even if the cladding material 1 contains 0.3% or less of V or Mo, or 0.1 % or less of Pb, Li, Ca, or Na.

### Cladding material 2 (inner-side cladding material)

### Si:

When using the clad sheet according to the present invention as a refrigerant tube, it is necessary to form a refrigerant passage by assembling the formed clad sheets to face each other, or bonding the formed clad sheet to another member. When forming a refrigerant passage by assembling the formed clad sheets to face each other, or another member is not provided with a filler metal, it is necessary to apply a filler metal to the inner side of the clad sheet. Therefore, Si must be added to the cladding material 2 (inner-side cladding material) to obtain an Al-Si alloy filler metal. The Si content in the cladding material 2 is preferably 6 to 13%. If the Si content is less than 6%, the amount of filler metal melted may be insufficient (i.e., the filler metal may not exhibit a sufficient function). If the Si content exceeds 13%, an Si primary crystal may be produced so that it may be difficult to produce a sound clad sheet.

### Sr:

The Si particles contained in the cladding material 2 are finely dispersed by adding Sr to the cladding material 2 (inner-side cladding material) so that liquid phases of a molten filler metal produced during brazing are easily bonded. As a result, the fluidity of the liquid phase is improved so that the cladding material 2 exhibits excellent brazability. The Sr content is preferably 0.005 to 0.05%. If the Sr content is less than 0.005%, the effect may be insufficient. If the Sr content exceeds 0.05%, coarse Al-Si-Sr compounds may be produced so that the effect may decrease.

### Cu:

Zn that has a potential decreasing effect is concentrated at the joint between the cladding material 2 (inner-side cladding material) and the cladding material 1 (outer-side cladding material) so that the joint tends to be preferentially corroded. It is possible to counterbalance the potential decreasing effect of Zn by adding Cu that has a potential increasing effect to the cladding material 2 (inner-side cladding material) so that preferential corrosion of the joint can be suppressed. The Cu content is preferably 0.1 to 0.5%. If the Cu content is less than 0.1%, the effect may be insufficient. If the Cu content exceeds 0.5%, the joint may serve as a cathode due to an increase in potential which promotes corrosion of the area around the joint. The Cu content is more preferably 0.2 to 0.4%.

The cladding material 2 normally contains about 0.1 to 0.2% of Fe as impurities. The Fe content may be reduced to less than 0.1 % in order to improve the brazability of the cladding material 2. Alternatively, 1.0% or less of Fe may be added to the cladding material 1 in order to improve the strength of the cladding material 2. The effects of the present invention are not impaired even if the cladding material 2 contains 0.3% or less of V, Mo, or Ni, or 0.1% or less of Pb, Li, Ca, or Na. 0.3% or less of Ti may be added to the cladding material 2 in order to refine the cast structure. 0.1% or less of B may be added to the cladding material 2 in order to prevent oxidation.

When using the clad sheet according to the present invention as a thin material, it is preferable to harden (H temper) the clad sheet in order to suppress erosion during brazing. When using the clad sheet according to the present invention as a refrigerant tube, the clad sheet is press-worked, for example. Therefore, high elongation may be required. In this case, it is effective to heat the product at 300 to 400°C for 2 to 5 hours during cold-rolling so that the core material has a recrystallized structure, cold-roll the resulting product to the final thickness, and subject the resulting product to a recovery treatment by heating the product. If the temperature of the heat treatment during cold rolling is less than 300°C, or the heat treatment time is less than 2 hours, a sufficient recrystallized structure may not be obtained. If the temperature of the heat treatment during cold rolling is more than 400°C, or the heat treatment time is more than 5 hours, a recrystallized structure is obtained. However, since the effect of the heat treatment is saturated, the economic efficiency decreases.

The elongation of the material is increased by cold-rolling the product to the final thickness at a rolling reduction rate of 10 to 40%, and then heating the product at 200 to 400°C for 2 to 5 hours. If the rolling reduction rate is less than 10%, recrystallization may not occur during brazing so that erosion may occur. If the rolling reduction rate is more than 40%, complete softening may occur during final annealing so that erosion may occur to a large extent in the low-processed area during brazing. If the final heat treatment temperature is less than 200°C, or the final heat treatment time is less than 2 hours, sufficient recovery may not be achieved so that the elongation of the material may decrease. If the final heat treatment temperature is more than 400°C, or the final heat treatment time is more than 5 hours, the core material may be recrystallized (O temper).

The material that has been cold-rolled at a rolling reduction rate of 10 to 40% and then heated at 200 to 400°C for 2 to 5 hours (recovery heat treatment) must be recrystallized during brazing in order to prevent erosion during brazing. Therefore, it is necessary to prevent a situation in which minute compounds that inhibit recrystallization precipitate in the core material. In this case, it is preferable to homogenize the ingot of the core material at 550 to 620°C for 2 to 20 hours. If the homogenization temperature is less than 550°C, or the homogenization time is less than 2 hours, the ingot may not be sufficiently homogenized, and minute compounds that inhibit recrystallization may precipitate in the core material. If the homogenization temperature is more than 620°C, or the homogenization time is more than 20 hours, the ingot may be melted. Moreover, since the effect is saturated, the economic efficiency decreases.

### EXAMPLES

The present invention is described below by way of examples and comparative examples. Note that the following examples merely illustrate several aspects of the present invention. The present invention is not limited to the following examples.

### (Test A)

An aluminum alloy for the cladding material 1 (outer-side cladding material) having a composition shown in Table 1 or 2, an aluminum alloy for the core material shown in Table 3 or 4, and an aluminum alloy for the cladding material 2 (inner-side cladding material) having a composition shown in Table 5 or 6 were continuously cast, and homogenized by a normal method. The aluminum alloy for the cladding material 1 and the aluminum alloy for the cladding material 2 were then hot-rolled, and placed on the aluminum alloy for the core material according to the combination shown in Table 7 or 8 so that the thickness ratio of the cladding material 1, the core material, and the cladding material 2 was 20%/70%/10%. The aluminum alloys were then subjected to hot rolling, cold rolling, optional process annealing, and final annealing to obtain a three-layered clad sheet (temper: H14) having a thickness of 0.20 mm.

**TABLE 1**

| No. | Composition (mass%) | | | | | | | | | | |
|---|---|---|---|---|---|---|---|---|---|---|---|
| | Si | Zn | Mn | Ti | Sr | Cr | Zr | In | Sn | Ni | Al |
| A1 | 3 | 4 | 1 | | | | | | | | Balance |
| A2 | 6 | 4 | 1 | | | | | | | | Balance |
| A3 | 5 | 2 | 1 | | | | | | | | Balance |
| A4 | 5 | 8 | 1 | | | | | | | | Balance |
| A5 | 5 | 4 | 0.3 | | | | | | | | Balance |
| A6 | 5 | 4 | 1.8 | | | | | | | | Balance |
| A7 | 5 | 4 | | 0.05 | | | | | | | Balance |
| A8 | 5 | 4 | | 0.3 | | | | | | | Balance |
| A9 | 5 | 4 | 1 | 0.15 | | | | | | | Balance |
| A10 | 5 | 4 | 1 | | 0.005 | | | | | | Balance |
| A11 | 5 | 4 | 1 | | 0.05 | | | | | | Balance |
| A12 | 5 | 4 | 1 | | | 0.3 | | | | | Balance |
| A13 | 5 | 4 | 1 | 0.15 | | | 0.3 | | | | Balance |
| A14 | 5 | 4 | 1 | 0.15 | | | | 0.001 | | | Balance |
| A15 | 5 | 4 | | 0.15 | | | | 0.1 | | | Balance |
| A16 | 5 | 4 | | 0.15 | | | | | 0.001 | | Balance |
| A17 | 5 | 4 | | 0.15 | | | | | 0.1 | | Balance |
| A18 | 5 | 4 | | 0.15 | | | | | | 0.04 | Balance |
| A19 | 3.5 | 4 | 1 | 0.15 | | | | | | | Balance |
| A20 | 5.5 | 4 | 1 | 0.15 | | | | | | | Balance |
| A21 | 5 | 3 | 1 | | | | | | | | Balance |
| A22 | 5 | 7 | 1 | | | | | | | | Balance |
| A23 | 5 | 4 | 1.3 | | | | | | | | Balance |
| A24 | 5 | 4 | | 0.15 | | | | | 0.04 | | Balance |
| A25 | 5 | 4 | | 0.15 | | | | | | 0.04 | Balance |

**TABLE 2**

| No. | Composition (mass%) | | | | | | | | | | |
|---|---|---|---|---|---|---|---|---|---|---|---|
| | Si | Zn | Mn | Ti | Sr | Cr | Zr | In | Sn | Ni | Al |
| A26 | 2 | 4 | 1 | | | | | | | | Balance |
| A27 | 7 | 4 | 1 | | | | | | | | Balance |
| A28 | 5 | 1.5 | 1 | | | | | | | | Balance |
| A29 | 5 | 9 | 1 | | | | | | | | Balance |
| A30 | 5 | 4 | 0.2 | | | | | | | | Balance |
| A31 | 5 | 4 | 2 | | | | | | | | Balance |
| A32 | 5 | 4 | | 0.04 | | | | | | | Balance |
| A33 | 5 | 4 | 1 | 0.35 | | | | | | | Balance |
| A34 | 5 | 4 | 1 | | 0.005 | | | | | | Balance |
| A35 | 5 | 4 | 1 | | 0.07 | | | | | | Balance |
| A36 | 5 | 4 | 1 | | | 0.4 | | | | | Balance |
| A37 | 5 | 4 | 1 | 0.15 | | | 0.4 | | | | Balance |
| A38 | 5 | 4 | 1 | 0.15 | | | | 0.0005 | | | Balance |
| A39 | 5 | 4 | | 0.15 | | | | 0.15 | | | Balance |
| A40 | 5 | 4 | | 0.15 | | | | | 0.0005 | | Balance |
| A41 | 5 | 4 | | 0.15 | | | | | 0.15 | | Balance |
| A42 | 5 | 4 | | 0.15 | | | | | | 0.06 | Balance |

**TABLE 3**

| No. | Composition (mass%) | | | | | | |
|---|---|---|---|---|---|---|---|
| | Si | Cu | Mn | Cr | Zr | Mg | Al |
| C1 | 0.5 | 0.6 | 1.3 | | | | Balance |
| C2 | 1.2 | 0.6 | 1.3 | | | | Balance |
| C3 | 0.8 | 0.2 | 1.3 | | | | Balance |
| C4 | 0.8 | 1 | 1.3 | | | | Balance |
| C5 | 0.8 | 0.6 | 1 | | | | Balance |
| C6 | 0.8 | 0.6 | 1.8 | | | | Balance |
| C7 | 0.8 | 0.6 | 1.3 | 0.3 | | | Balance |
| C8 | 0.8 | 0.6 | 1.3 | | 0.3 | | Balance |
| C9 | 0.8 | 0.6 | 1.3 | | | 0.5 | Balance |
| C10 | 0.8 | 0.6 | 1.3 | | | | Balance |
| C11 | 0.8 | 0.6 | 1.3 | | | | Balance |
| C12 | 0.9 | 0.6 | 1.6 | | | | Balance |
| C13 | 0.65 | 0.6 | 1.3 | | | | Balance |
| C1 | 1.1 | 0.6 | 1.3 | | | | Balance |
| C15 | 0.8 | 0.2 | 1.3 | | | | Balance |
| C16 | 0.8 | 0.9 | 1.3 | | | | Balance |
| C17 | 0.8 | 0.6 | 1.1 | | | | Balance |
| C18 | 0.8 | 0.6 | 1.7 | | | | Balance |
| C1 | 0.8 | 0.6 | 1.3 | | | 0.3 | Balance |
| C20 | 0.8 | 0.6 | 1.3 | | | | Balance |

**TABLE4**

| No. | Composition (mass%) | | | | | | |
|---|---|---|---|---|---|---|---|
| | Si | Cu | Mn | Cr | Zr | Mg | Al |
| C21 | 0.4 | 0.6 | 1.3 | | | | Balance |
| C22 | 1.3 | 0.6 | 1.3 | | | | Balance |
| C23 | 0.8 | 0.1 | 1.3 | | | | Balance |
| C24 | 0.8 | 1.1 | 1.3 | | | | Balance |
| C25 | 0.8 | 0.6 | 0.9 | | | | Balance |
| C26 | 0.8 | 0.6 | 1.9 | | | | Balance |
| C27 | 0.8 | 0.6 | 1.3 | 0.4 | | | Balance |
| C28 | 0.8 | 0.6 | 1.3 | | 0.4 | | Balance |
| C29 | 0.8 | 0.6 | 1.3 | | | 0.6 | Balance |

**TABLE 5**

| No. | Composition (mass%) | | | |
|---|---|---|---|---|
| | Sᵢ | Sr | Cu | Al |
| B1 | 6 | | | Balance |
| B2 | 13 | | | Balance |
| B3 | 10 | 0.005 | | Balance |
| B4 | 10 | 0.05 | | Balance |
| B5 | 10 | | 0.1 | Balance |
| B6 | 10 | | 0.5 | Balance |
| B7 | 10 | | | Balance |
| B8 | 9 | | | Balance |
| B9 | 9 | | 0.2 | Balance |
| B10 | 7.5 | | 0.4 | Balance |

**TABLE 6**

| No. | Composition (mass%) | | | |
|---|---|---|---|---|
| | Si | Sr | Cu | Al |
| B11 | 5 | | | Balance |
| B12 | 14 | | | Balance |
| B13 | 10 | 0.06 | | Balance |
| B14 | 10 | | 0.6 | Balance |

**TABLE 7**

| Specimen No. | Cladding material 1 | Core material | Cladding material 2 |
|---|---|---|---|
| 1 | A1 | C1 | B1 |
| 2 | A2 | C2 | B2 |
| 3 | A3 | C3 | B3 |
| 4 | A4 | C4 | B4 |
| 5 | A5 | C5 | B5 |
| 6 | A6 | C6 | B6 |
| 7 | A7 | C7 | B7 |
| 8 | A8 | C8 | B8 |
| 9 | A9 | C9 | B9 |
| 10 | A10 | C10 | B10 |
| 11 | A11 | C11 | B1 |
| 12 | A12 | C12 | B2 |
| 13 | A13 | C13 | B3 |
| 14 | A14 | C14 | B4 |
| 15 | A15 | C15 | B5 |
| 16 | A16 | C16 | B6 |
| 17 | A17 | C17 | B7 |
| 18 | A18 | C18 | B8 |
| 19 | A19 | C19 | B9 |
| 20 | A20 | C20 | B10 |
| 21 | A21 | C1 | B1 |
| 22 | A22 | C2 | B2 |
| 23 | A23 | C3 | B3 |
| 24 | A24 | C4 | B4 |
| 25 | A25 | C5 | B5 |

**TABLE 8**

| Specimen No. | Cladding material 1 | Core material | Cladding material 2 |
|---|---|---|---|
| 26 | A26 | C21 | B7 |
| 27 | A27 | C12 | B7 |
| 28 | A28 | C23 | B7 |
| 29 | A29 | C12 | B7 |
| 30 | A30 | C26 | B7 |
| 31 | A31 | C12 | B7 |
| 32 | A32 | C12 | B7 |
| 33 | A33 | C12 | B7 |
| 34 | A34 | C22 | B7 |
| 35 | A35 | C24 | B7 |
| 36 | A36 | C26 | B7 |
| 37 | A37 | C12 | B7 |
| 38 | A38 | C12 | B7 |
| 39 | A39 | C12 | B13 |
| 40 | A40 | C12 | B11 |
| 41 | A41 | C12 | B7 |
| 42 | A42 | C12 | B7 |
| 43 | A10 | C27 | B7 |
| 44 | A10 | C28 | B7 |
| 45 | A10 | C29 | B7 |
| 46 | A10 | C12 | B14 |

The resulting three-layered clad sheet (specimen) was subjected to the following tests 1 to 4.

### Test 1:

The clad sheet was cut to dimensions of 100×250 mm. About 5 g/m² of a fluoride flux was applied to each side of the clad sheet, and then dried. The clad sheet was then brazed by heating the clad sheet to 600°C in a nitrogen gas atmosphere at an average temperature increase rate of 50°C/min. The clad sheet was then processed into a JIS Z 2201 No. 5 specimen, and subjected to a tensile test at room temperature in accordance with JIS Z 2241. A case where the tensile strength of the specimen was 120 MPa or more was evaluated as "Good", and a case where the tensile strength of the specimen was less than 120 MPa was evaluated as "Bad".

### Test 2:

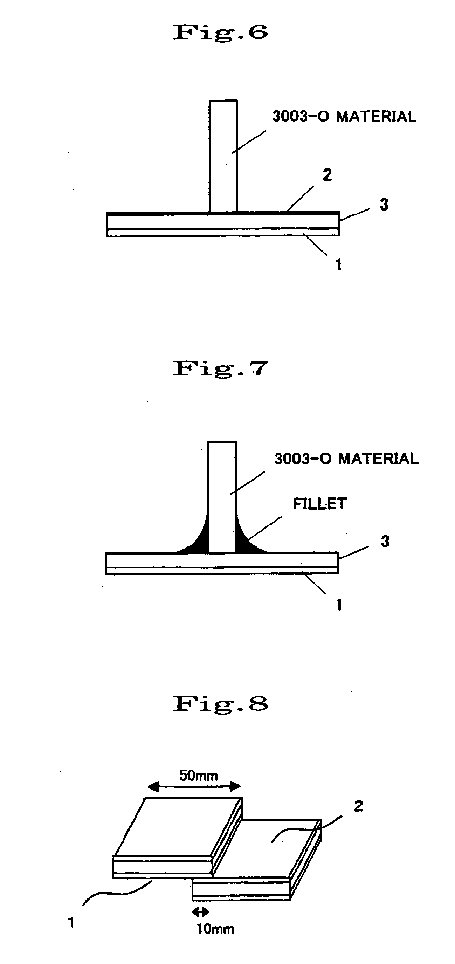

The clad sheet was cut to dimensions of 50×50 mm. The clad sheets thus obtained were held using a jig so that the cladding material 1 and the cladding material 2 overlapped by 10 mm (see FIG. 8). About 5 g/m² of a fluoride flux was applied to each side of the clad sheet, and then dried. The clad sheet was then brazed by heating the clad sheet to 600°C in a nitrogen gas atmosphere at an average temperature increase rate of 50°C/min. After masking the cladding material 2 (including the end face), the product was subjected to a SWAAT test (ASTM-G85-A3). A case where perforation corrosion from the cladding material 1 and separation due to corrosion did not occur at the joint when 8 weeks had elapsed was evaluated as "Good", and a case where perforation corrosion from the cladding material 1 or separation due to corrosion occurred at the joint when 8 weeks had elapsed was evaluated as "Bad".

### Test 3:

The clad sheet was cut to dimensions of 25×50 mm, and then subjected to an inverted T-shaped test (horizontal sheet: cladding material 2, vertical sheet: 3003-O material (25×50×1.0 mm)) (see FIG. 6). The bonded specimen (see FIG 7) was buried in a resin, and the cross-sectional area of a fillet formed on the bonding surface with the vertical sheet was measured. The ratio of the cross-sectional area of the fillet after brazing to the cross-sectional area of the cladding material 2 before brazing was calculated, and taken as the flow coefficient determined by the inverted T-shaped test. A case where the flow coefficient was 0.3 or more was evaluated as "Good", and a case where the flow coefficient was less than 0.3 was evaluated as "Bad".

### Test 4:

The clad sheet was cut to dimensions of 25×100 mm. The clad sheets thus obtained were placed one on top of the other so that the cladding material 1 was positioned on the side that was bonded to a corrugated bare fin material, and held using a jig so that the fin height was 10 mm and the fin pitch was 40 mm. About 5 g/m² of a fluoride flux was sprayed onto the clad sheet, and then dried. The clad sheet was then brazed by heating the clad sheet to 600°C in a nitrogen gas atmosphere at an average temperature increase rate of 50°C/min. As the fin material, an AA3203 alloy fin material (1.5% of Zn was added, thickness: 0.07 mm, temper: H14) was used. The specimen that was bonded in the shape of a mini-core was buried in a resin, and the cross-sectional area of a fillet formed on the bonding surface with the fin was measured. The ratio of the cross-sectional area of the fillet after brazing to the cross-sectional area of the cladding material 1 before brazing was calculated, and taken as the flow coefficient determined by the mini-core test. A case where the flow coefficient was 0.05 or more was evaluated as "Good", and a case where the flow coefficient was less than 0.05 was evaluated as "Bad".

The results of the tests 1 to 4 are shown in Tables 9 and 10. As shown in Table 9, the specimens 1 to 25 according to the present invention had a tensile strength of 120 MPa or more after brazing, a flow coefficient determined by the inverted T-shaped test of 0.3 or more, and a flow coefficient determined by the mini-core test of 0.05 or more. Specifically, the specimens 1 to 25 exhibited excellent strength after brazing and excellent brazability. The specimens 1 to 25 did not show perforation corrosion and separation at the joint when subjected to the SWAAT test for 8 weeks. Specifically, the specimens 1 to 25 exhibited excellent corrosion resistance.

**TABLE 9**

| Specimen No. | Tensile strength (≥120 MPa) | Inverted T-shaped test (flow coefficient≥0.3) | Mini-core test (flow coefficient>0.05) | Perforation corrosion when subjected to SWAAT test for 8 weeks | Separation at joint when subjected to SWAAT test for 8 weeks | Production of specimen |
|---|---|---|---|---|---|---|
| 1 | Good | Good | Good | Good | Good | Good |
| 2 | Good | Good | Good | Good | Good | Good |
| 3 | Good | Good | Good | Good | Good | Good |
| 4 | Good | Good | Good | Good | Good | Good |
| 5 | Good | Good | Good | Good | Good | Good |
| 6 | Good | Good | Good | Good | Good | Good |
| 7 | Good | Good | Good | Good | Good | Good |
| 8 | Good | Good | Good | Good | Good | Good |
| 9 | Good | Good | Good | Good | Good | Good |
| 10 | Good | Good | Good | Good | Good | Good |
| 11 | Good | Good | Good | Good | Good | Good |
| 12 | Good | Good | Good | Good | Good | Good |
| 13 | Good | Good | Good | Good | Good | Good |
| 14 | Good | Good | Good | Good | Good | Good |
| 15 | Good | Good | Good | Good | Good | Good |
| 16 | Good | Good | Good | Good | Good | Good |
| 17 | Good | Good | Good | Good | Good | Good |
| 18 | Good | Good | Good | Good | Good | Good |
| 19 | Good | Good | Good | Good | Good | Good |
| 20 | Good | Good | Good | Good | Good | Good |
| 21 | Good | Good | Good | Good | Good | Good |
| 22 | Good | Good | Good | Good | Good | Good |
| 23 | Good | Good | Good | Good | Good | Good |
| 24 | Good | Good | Good | Good | Good | Good |
| 25 | Good | Good | Good | Good | Good | Good |

**TABLE 10**

| Specimen No. | Tensile strength (≥120 MPa) | Inverted T-shaped test (flow coefficient≥0.3) | Mini-core test (flow coefficient≥0.05) | Perforation corrosion when subjected to SWAAT test for 8 weeks | Separation at joint when subjected to SWAAT test for 8 weeks | Production of specimen |
|---|---|---|---|---|---|---|
| 26 | Bad | Good | Bad | Good | Good | Good |
| 27 | Good | Good | Good | Bad | Good | Good |
| 28 | Bad | Good | Good | Bad | Good | Good |
| 29 | Good | Good | Good | Good | Bad | Good |
| 30 | Bad | Good | Good | Bad | Good | Good |
| 31 | Good | Good | Bad | Good | Good | Good |
| 32 | Good | Good | Good | Bad | Good | Good |
| 33 | Good | Good | Bad | Good | Good | Good |
| 34 | Good | Good | Good | Bad | Good | Good |
| 35 | Good | Good | Good | Bad | Good | Good |
| 36 | - | - | - | - | - | Bad |
| 37 | Good | Good | Bad | Good | Bad | Good |
| 38 | - | - | - | - | - | Bad |
| 39 | Good | Good | Good | Good | Bad | Good |
| 40 | Good | Bad | Good | Good | Good | Good |
| 41 | Good | Good | Good | Good | Bad | Good |
| 42 | Good | Good | Good | Bad | Good | Good |
| 43 | - | - | - | - | - | Bad |
| 44 | - | - | - | - | - | Bad |
| 45 | - | - | - | - | - | Bad |
| 46 | Good | Good | Good | Bad | Good | Good |

As shown in Table 10, the specimen 26 had a flow coefficient determined by the mini-core test of less than 0.05 due to a low Si content in the cladding material 1, and a tensile strength of less than 120 MPa due to a low Si content in the core material. The specimen 27 did not exhibit sufficient corrosion resistance since the alloy components of the cladding material 1 containing Zn flowed to another area due to a high Si content in the cladding material 1. As a result, perforation corrosion occurred when the specimen 27 was subjected to the SWAAT test for 8 weeks. The specimen 28 did not exhibit sufficient corrosion resistance due to a low Zn content in the cladding material 1. As a result, perforation corrosion occurred when the specimen 28 was subjected to the SWAAT test for 8 weeks. The specimen 28 had a tensile strength of less than 120 MPa due to a low Cu content in the core material. The specimen 29 showed a phenomenon in which Zn was concentrated in the fillet due to a high Zn content in the cladding material 1. As a result, separation occurred at the joint when the specimen 29 was subjected to the SWAAT test for 8 weeks. The specimen 30 showed a phenomenon in which the size of the primary crystal formed in the cladding material 1 decreased due to a low Mn content in the cladding material 1. As a result, perforation corrosion occurred when the specimen 30 was subjected to the SWAAT test for 8 weeks. The specimen 30 had a tensile strength of less than 120 MPa due to a low Mn content in the core material. The specimen 31 had a flow coefficient determined by the mini-core test of less than 0.05 (i.e., a sufficient fillet was not formed at the fin joint) due to a high Mn content in the cladding material 1.

The specimen 32 showed a phenomenon in which the size of the primary crystal formed in the cladding material 1 decreased due to a low Ti content in the cladding material 1. As a result, perforation corrosion occurred when the specimen 32 was subjected to the SWAAT test for 8 weeks. The specimen 33 had a flow coefficient determined by the mini-core test of less than 0.05 (i.e., a sufficient fillet was not formed at the fin joint) due to a high Ti content in the cladding material 1. The specimen 34 showed local melting due to a high Si content in the core material. As a result, perforation corrosion occurred when the specimen 34 was subjected to the SWAAT test for 8 weeks. The specimen 35 showed local melting due to a high Cu content in the core material. As a result, perforation corrosion occurred when the specimen 35 was subjected to the SWAAT test for 8 weeks. The specimen 36 showed significant edge cracking during rolling due to a high Cr content in the cladding material 1 and a high Mn content in the core material (i.e., a clad sheet could not be produced). The specimen 37 had a flow coefficient determined by the mini-core test of less than 0.05 (i.e., a sufficient fillet was not formed at the fin joint) due to a low Si content in the cladding material 1. The specimen 38 showed significant edge cracking during rolling due to a high Zr content in the cladding material 1 and a high Ti content in the core material (i.e., a clad sheet could not be produced). The specimen 39 showed significant corrosion in the overlapping area due to a high In content in the cladding material 1. As a result, separation occurred when the specimen 39 was subjected to the SWAAT test for 8 weeks. Moreover, refinement of the Si particles in the cladding material 2 was not observed after brazing due to a high Sr content in the cladding material 2.

The specimen 40 exhibited corrosion resistance when subjected to the SWAAT test due to an appropriate Zn content although the Sn content in the cladding material 1 was low. However, the specimen 40 had a flow coefficient determined by the inverted T-shaped test of less than 0.3 due to a low Si content in the cladding material 2. The specimen 41 showed significant corrosion in the overlapping area due to a high Sn content in the cladding material 1. As a result, separation occurred when the specimen 41 was subjected to the SWAAT test for 8 weeks. The specimen 42 showed rapid corrosion in the cladding material 1 due to a high Ni content in the cladding material 1. As a result, perforation corrosion occurred when the specimen 42 was subjected to the SWAAT test for 8 weeks. The specimen 43 showed significant edge cracking during rolling due to a high Zr content in the core material (i.e., a clad sheet could not be produced). The specimen 44 showed significant edge cracking during rolling due to a high Zr content in the core material (i.e., a clad sheet could not be produced). The specimen 45 did not allow overlap brazing due to a high Mg content in the core material (i.e., the SWAAT test could not be performed). The specimen 46 showed an increase in potential of the fillet due to a high Cu content in the cladding material 2. As a result, the sacrificial anode material around the fillet was corroded at an early stage of the SWAAT test, and perforation corrosion occurred when the specimen 46 was subjected to the SWAAT test for 8 weeks.

### (Test B)

An aluminum alloy for the cladding material 1 shown in Table 1 or 2 and an aluminum alloy for the core material shown in Table 3 or 4 were continuously cast, and homogenized by a normal method. The aluminum alloy for the cladding material 1 was then hot-rolled, and placed on the aluminum alloy for the core material according to the combination shown in Table 11 or 12 so that the thickness ratio of the cladding material 1 and the core material was 20%/80%. The aluminum alloys were then subjected to hot rolling, cold rolling, optional process annealing, and final annealing to obtain a two-layered clad sheet (temper: H14) having a thickness of 0.20 mm. The resulting two-layered clad sheet was subjected to the following tests 1 to 3.

**TABLE 11**

| Specimen No. | Cladding material 1 | Core material |
|---|---|---|
| 47 | A1 | C1 |
| 48 | A2 | C2 |
| 49 | A3 | C3 |
| 50 | A4 | C4 |
| 51 | A5 | C5 |
| 52 | A6 | C6 |
| 53 | A7 | C7 |
| 54 | A8 | C8 |
| 55 | A9 | C9 |
| 56 | A10 | C10 |
| 57 | A11 | C11 |
| 58 | A12 | C12 |
| 59 | A13 | C13 |
| 60 | A14 | C14 |
| 61 | A15 | C15 |
| 62 | A16 | C16 |
| 63 | A17 | C17 |
| 64 | A18 | C18 |
| 65 | A19 | C19 |
| 66 | A20 | C20 |
| 67 | A21 | C1 |
| 68 | A22 | C2 |
| 69 | A23 | C3 |
| 70 | A24 | . C4 |
| 71 | A25 | C5 |

**TABLE 12**

| Specimen No. | Cladding material 1 | Core material |
|---|---|---|
| 72 | A26 | C1 |
| 73 | A27 | C9 |
| 74 | A28 | C23 |
| 75 | A29 | C9 |
| 76 | A30 | C26 |
| 77 | A31 | C9 |
| 78 | A32 | C12 |
| 79 | A33 | C12 |
| 80 | A34 | C22 |
| 81 | A35 | C24 |
| 82 | A36 | C26 |
| 83 | A37 | C12 |
| 84 | A38 | C12 |
| 85 | A39 | C12 |
| 86 | A27 | C12 |
| 87 | A41 | C12 |
| 88 | A42 | C12 |
| 89 | A10 | C27 |
| 90 | A10 | C28 |
| 91 | A10 | C29 |

### Test 1:

The clad sheet was cut to dimensions of 100×250 mm. About 5 g/m² of a fluoride flux was applied to each side of the clad sheet, and then dried. The clad sheet was then brazed by heating the clad sheet to 600°C in a nitrogen gas atmosphere at an average temperature increase rate of 50°C/min. The clad sheet was then processed into a JIS Z 2201 No. 5 specimen, and subjected to a tensile test at room temperature in accordance with JIS Z 2241. A case where the tensile strength of the specimen was 120 MPa or more was evaluated as "Good", and a case where the tensile strength of the specimen was less than 120 MPa was evaluated as "Bad".

### Test 2:

The clad sheet was cut to dimensions of 50×50 mm. The clad sheets thus obtained were held using a jig so that the cladding material 1 and the cladding material 2 overlapped by 10 mm (see FIG 8). About 5 g/m² of a fluoride flux was applied to each side of the clad sheet, and then dried. The clad sheet was then brazed by heating the clad sheet to 600°C in a nitrogen gas atmosphere at an average temperature increase rate of 50°C/min. After masking the cladding material 2 (including the end face), the product was subjected to a SWAAT test (ASTM-G85-A3). A case where perforation corrosion from the cladding material 1 and separation due to corrosion did not occur at the joint when 8 weeks had elapsed was evaluated as "Good", and a case where perforation corrosion from the cladding material 1 or separation due to corrosion occurred at the joint when 8 weeks had elapsed was evaluated as "Bad".

### Test 3:

The clad sheet was cut to dimensions of 25×100 mm. The clad sheets thus obtained were placed one on top of the other so that the cladding material 1 was positioned on the side that was bonded to a corrugated bare fin material, and held using a jig so that the fin height was 10 mm and the fin pitch was 40 mm. About 5 g/m² of a fluoride flux was sprayed onto the clad sheet, and then dried. The clad sheet was then brazed by heating, the clad sheet to 600°C in a nitrogen gas atmosphere at an average temperature increase rate of 50°C/min. As the fin material, an AA3203 alloy fin material (1.5% of Zn was added, thickness: 0.07 mm, temper: H14) was used. The specimen that was bonded in the shape of a mini-core was buried in a resin, and the cross-sectional area of a fillet formed on the bonding surface with the fin was measured. The ratio of the cross-sectional area of the fillet after brazing to the cross-sectional area of the cladding material 1 before brazing was calculated, and taken as the flow coefficient determined by the mini-core test. A case where the flow coefficient was 0.05 or more was evaluated as "Good", and a case where the flow coefficient was less than 0.05 was evaluated as "Bad".

The results of the tests 1 to 3 are shown in Tables 13 and 14. As shown in Table 13, the specimens 47 to 71 according to the present invention had a tensile strength of 120 MPa or more after brazing and a flow coefficient determined by the mini-core test of 0.05 or more. Specifically, the specimens 47 to 71 exhibited excellent strength after brazing and excellent brazability. The specimens 47 to 71 did not show perforation corrosion when subjected to the SWAAT test for 8 weeks. Specifically, the specimens 47 to 71 exhibited excellent corrosion resistance.

**TABLE 13**

| Specimen No. | Tensile strength (≥120 MPa) | Mini-core test (flow coefficient≥0.05) | Perforation corrosion when subjected to SWAAT test for 8 weeks | Separation at joint when subjected to SWAAT test for 8 weeks | Production of specimen |
|---|---|---|---|---|---|
| 47 | Good | Good | Good | Good | Good |
| 48 | Good | Good | Good | Good | Good |
| 49 | Good | Good | Good | Good | Good |
| 50 | Good | Good | Good | Good | Good |
| 51 | Good | Good | Good | Good | Good |
| 52 | Good | Good | Good | Good | Good |
| 53 | Good | Good | Good | Good | Good |
| 54 | Good | Good | Good | Good | Good |
| 55 | Good | Good | Good | Good | Good |
| 56 | Good | Good | Good | Good | Good |
| 57 | Good | Good | Good | Good | Good |
| 58 | Good | Good | Good | Good | Good |
| 59 | Good | Good | Good | Good | Good |
| 60 | Good | Good | Good | Good | Good |
| 61 | Good | Good | Good | Good | Good |
| 62 | Good | Good | Good | Good | Good |
| 63 | Good | Good | Good | Good | Good |
| 64 | Good | Good | Good | Good | Good |
| 65 | Good | Good | Good | Good | Good |
| 66 | Good | Good | Good | Good | Good |
| 67 | Good | Good | Good | Good | Good |
| 68 | Good | Good | Good | Good | Good |
| 69 | Good | Good | Good | Good | Good |
| 70 | Good | Good | Good | Good | Good |
| 71 | Good | Good | Good | Good | Good |

**TABLE 14**

| Specimen No. | Tensile strength (≥120 MPa) | Mini-core test (flow coefficient≥0.05) | Perforation corrosion when subjected to SWAAT test for 8 weeks | Separation at joint when subjected to SWAAT test for 8 weeks | Production of specimen |
|---|---|---|---|---|---|
| 72 | Bad | Bad | Good | Good | Good |
| 73 | Good | Good | Bad | Good | Good |
| 74 | Good | Good | Bad | Good | Good |
| 75 | Good | Good | Good | Bad | Good |
| 76 | Bad | Good | Bad | Good | Good |
| 77 | Good | Bad | Good | Good | Good |
| 78 | Good | Good | Bad | Good | Good |
| 79 | Good | Bad | Good | Good | Good |
| 80 | Good | Good | Bad | Good | Good |
| 81 | Good | Good | Bad | Good | Good |
| 82 | - | - | - | - | Bad |
| 83 | Good | Bad | Good | Good | Good |
| 84 | - | - | - | - | Bad |
| 85 | Good | Good | Good | Bad | Good |
| 86 | Good | Good | Bad | Good | Good |
| 87 | Good | Good | Good | Bad | Good |
| 88 | Good | Good | Bad | Good | Good |
| 89 | - | - | - | - | Bad |
| 90 | - | - | - | - | Bad |
| 91 | - | - | - | - | Bad |

As shown in Table 14, the specimen 72 had a flow coefficient determined by the mini-core test of less than 0.05 due to a low Si content in the cladding material 1. The specimen 72 had a tensile strength of less than 120 MPa due to a low Si content in the core material. The specimen 73 did not exhibit sufficient corrosion resistance since the alloy components of the cladding material 1 containing Zn flowed to another area due to a high Si content in the cladding material 1. As a result, perforation corrosion occurred when the specimen 73 was subjected to the SWAAT test for 8 weeks. The specimen 74 did not exhibit sufficient corrosion resistance due to a low Zn content in the cladding material 1. As a result, perforation corrosion occurred when the specimen 74 was subjected to the SWAAT test for 8 weeks. The specimen 74 had a tensile strength of less than 120 MPa due to a low Cu content in the core material. The specimen 75 showed a phenomenon in which Zn was concentrated in the fillet due to a high Zn content in the cladding material 1. As a result, separation occurred at the joint when the specimen 75 was subjected to the SWAAT test for 8 weeks. The specimen 76 showed a phenomenon in which the size of the primary crystal formed in the cladding material 1 decreased due to a low Mn content in the cladding material 1. As a result, perforation corrosion occurred when the specimen 76 was subjected to the SWAAT test for 8 weeks. The specimen 76 had a tensile strength of less than 120 MPa due to a low Mn content in the core material. The specimen 77 had a flow coefficient determined by the mini-core test of less than 0.05 (i.e., a sufficient fillet was not formed at the fin joint) due to a high Mn content in the cladding material 1. The specimen 78 showed a phenomenon in which the size of the primary crystal formed in the cladding material 1 decreased due to a low Ti content in the cladding material 1. As a result, perforation corrosion occurred when the specimen 78 was subjected to the SWAAT test for 8 weeks. The specimen 79 had a flow coefficient determined by the mini-core test of less than 0.05 (i.e., a sufficient fillet was not formed at the fin joint) due to a high Ti content in the cladding material 1. The specimen 80 showed local melting due to a high Si content in the core material. As a result, perforation corrosion occurred when the specimen 80 was subjected to the SWAAT test for 8 weeks.

The specimen 81 showed local melting due to a high Cu content in the core material. As a result, perforation corrosion occurred when the specimen 81 was subjected to the SWAAT test for 8 weeks. The specimen 82 showed significant edge cracking due to a high Cr content in the cladding material 1 and a high Mn content in the core material (i.e., a clad sheet could not be produced). The specimen 83 had a flow coefficient determined by the mini-core test of less than 0.05 (i.e., a sufficient fillet was not formed at the fin joint) due to a low Si content in the cladding material 1. The specimen 84 showed significant edge cracking due to a high Zr content in the cladding material 1 and a high Ti content in the core material (i.e., a clad sheet could not be produced). The specimen 85 showed significant corrosion in the overlapping area due to a high In content in the cladding material 1. As a result, separation occurred when the specimen 85 was subjected to the SWAAT test for 8 weeks. Moreover, refinement of the Si particles in the cladding material 2 was not observed after brazing due to a high Sr content in the cladding material 2. The specimen 86 did not exhibit sufficient corrosion resistance since the alloy components of the cladding material 1 containing Zn flowed to another area due to a high Si content in the cladding material 1. As a result, perforation corrosion occurred when the specimen 86 was subjected to the SWAAT test for 8 weeks. The specimen 87 showed significant corrosion in the overlapping area due to a high Sn content in the cladding material 1. As a result, separation occurred when the specimen 87 was subjected to the SWAAT test for 8 weeks. The specimen 88 showed rapid corrosion in the cladding material 1 due to a high Ni content in the cladding material 1. As a result, perforation corrosion occurred when the specimen 88 was subjected to the SWAAT test for 8 weeks. The specimen 89 showed significant edge cracking due to a high Cr content in the core material (i.e., a clad sheet could not be produced). The specimen 90 showed significant edge cracking due to a high Zr content in the core material (i.e., a clad sheet could not be produced). The specimen 91 did not allow overlap brazing due to a high Mg content in the core material (i.e., the SWAAT test could not be performed).

### (Test C)

Clad sheets having a thickness of 20 mm were produced using the combinations (combinations No. 1 to 25 and No. 47 to 71) of the cladding material 1, the core material, and the cladding material 2 used for the specimens 1 to 25 and 47 to 71 (see Tests A and B) under different production conditions (homogenization, hot clad rolling, cold rolling, process annealing, final cold rolling, and final annealing). Tables 15 and 16 show the production conditions, and Tables 17 to 20 show the production conditions for each combination. The resulting clad sheet (specimen) was subjected to the following Tests 5 and 6.

**TABLE 15**

| Production condition | Homogenization | | Process annealing | | Final cold rolling | Final annealing | |
|---|---|---|---|---|---|---|---|
| | Temperature (°C) | Time (h) | Temperature (°C) | Time (h) | Rolling reduction rate (%) | Temperature (°C) | Time (h) |
| a | 550 | 2 | 350 | 3 | 25 | 350 | 3 |
| b | 620 | 20 | 350 | 3 | 25 | 350 | 3 |
| c | 580 | 10 | 300 | 2 | 25 | 350 | 3 |
| d | 580 | 10 | 400 | 5 | 25 | 350 | 3 |
| e | 580 | 10 | 350 | 3 | 10 | 350 | 3 |
| f | 580 | 10 | 350 | 3 | 40 | 350 | 3 |
| g | 580 | 10 | 350 | 3 | 25 | 200 | 2 |
| h | 580 | 10 | 350 | 3 | 25 | 450 | 5 |

**TABLE 16**

| Production condition | Homogenization | | Process annealing | | Final cold rolling | Final annealing | |
|---|---|---|---|---|---|---|---|
| | Temperature (°C) | Time (h) | Temperature (°C) | Time (h) | Rolling reduction rate (%) | Temperature (°C) | Time (h) |
| i | 540 | 20 | 350 | 3 | 25 | 350 | 3 |
| j | 630 | 2 | 350 | 3 | 25 | 350 | 3 |
| k | 580 | 10 | 290 | 5 | 25 | 350 | 3 |
| l | 580 | 10 | 410 | 2 | 25 | 350 | 3 |
| m | 580 | 10 | 350 | 3 | 5 | 350 | 3 |
| n | 580 | 10 | 350 | 3 | 45 | 350 | 3 |
| o | 580 | 10 | 350 | 3 | 25 | 180 | 5 |
| p | 580 | 10 | 350 | 3 | 25 | 470 | 2 |

**TABLE 17**

| Specimen No. | Combination | Production condition |
|---|---|---|
| 101 | 1 | a |
| 102 | 2 | b |
| 103 | 3 | c |
| 104 | 4 | d |
| 105 | 5 | e |
| 106 | 6 | f |
| 107 | 7 | g |
| 108 | 8 | h |
| 109 | 9 | a |
| 110 | 10 | b |
| 111 | 11 | c |
| 112 | 12 | d |
| 113 | 13 | e |
| 114 | 14 | f |
| 115 | 15 | g |
| 116 | 16 | h |
| 117 | 17 | a |
| 118 | 18 | b |
| 119 | 19 | c |
| 120 | 20 | d |
| 121 | 21 | e |
| 122 | 22 | f |
| 123 | 23 | g |
| 124 | 24 | h |
| 125 | 25 | a |

**TABLE 18**

| Specimen No. | Combination | Production condition |
|---|---|---|
| 126 | 47 | b |
| 127 | 48 | c |
| 128 | 49 | d |
| 129 | 50 | e |
| 130 | 51 | f |
| 131 | 52 | g |
| 132 | 53 | h |
| 133 | 54 | a |
| 134 | 55 | b |
| 135 | 56 | c |
| 136 | 57 | d |
| 137 | 58 | e |
| 138 | 59 | f |
| 139 | 60 | g |
| 140 | 61 | h |
| 141 | 62 | a |
| 142 | 63 | b |
| 143 | 64 | c |
| 144 | 65 | d |
| 145 | 66 | e |
| 146 | 67 | f |
| 147 | 68 | g |
| 148 | 69 | h |
| 149 | 70 | a |
| 150 | 71 | b |

**TABLE 19**

| Specimen No. | Combination | Production condition |
|---|---|---|
| 151 | 1 | i |
| 152 | 2 | j |
| 153 | 3 | k |
| 154 | 4 | l |
| 155 | 5 | m |
| 156 | 6 | n |
| 157 | 7 | o |
| 158 | 8 | p |
| 159 | 9 | i |
| 160 | 10 | j |
| 161 | 11 | k |
| 162 | 12 | l |
| 163 | 13 | m |
| 164 | 14 | n |
| 165 | 15 | o |
| 166 | 16 | p |
| 167 | 17 | i |
| 168 | 18 | j |
| 169 | 19 | k |
| 170 | 20 | l |
| 171 | 21 | m |
| 172 | 22 | n |
| 173 | 23 | o |
| 174 | 24 | p |
| 175 | 25 | i |

**TABLE 20**

| Specimen No. | Combination | Production condition |
|---|---|---|
| 176 | 47 | j |
| 177 | 48 | k |
| 178 | 49 | l |
| 179 | 50 | m |
| 180 | 51 | n |
| 181 | 52 | o |
| 182 | 53 | p |
| 183 | 54 | i |
| 184 | 55 | j |
| 185 | 56 | k |
| 186 | 57 | l |
| 187 | 58 | m |
| 188 | 59 | n |
| 189 | 60 | o |
| 190 | 61 | p |
| 191 | 62 | i |
| 192 | 63 | j |
| 193 | 64 | k |
| 194 | 65 | l |
| 195 | 66 | m |
| 196 | 67 | n |
| 197 | 68 | o |
| 198 | 69 | p |
| 199 | 70 | i |
| 200 | 71 | j |

### Test 5:

A JIS Z 2201 No. 5 specimen was produced using the clad sheet, and subjected to a tensile test at room temperature in accordance with JIS Z 2241. A case where the elongation of the material determined by the tensile test was 10% or more was evaluated as "Good", and a case where the elongation of the material was less than 10% was evaluated as "Bad".

### Test 6:

The specimen was cut to a given thickness, and subjected to an Erichsen test using an Erichsen tester so that the cladding material 1 formed a convex side. The condition was adjusted so that the thickness reduction ratio was 0 to 20%. About 5 g/m² of a fluoride flux was applied to each side of the specimen, and then dried. The specimen was then brazed by heating the specimen to 600°C in a nitrogen gas atmosphere at an average temperature increase rate of 50°C/min. The erosion depth of the unprocessed area and the low-processed area was measured. A case where the maximum erosion depth was 20% or more of the thickness of the core material was evaluated as "Bad", and a case where the maximum erosion depth was less than 20% of the thickness of the core material was evaluated as "Good".

**TABLE 21**

| Specimen No. | Melting during homogenization | Erosion in unprocessed area | Erosion in low-processed area | Elongation |
|---|---|---|---|---|
| 101 | Good | Good | Good | Good |
| 102 | Good | Good | Good | Good |
| 103 | Good | Good | Good | Good |
| 104 | Good | Good | Good | Good |
| 105 | Good | Good | Good | Good |
| 106 | Good | Good | Good | Good |
| 107 | Good | Good | Good | Good |
| 108 | Good | Good | Good | Good |
| 109 | Good | Good | Good | Good |
| 110 | Good | Good | Good | Good |
| 111 | Good | Good | Good | Good |
| 112 | Good | Good | Good | Good |
| 113 | Good | Good | Good | Good |
| 114 | Good | Good | Good | Good |
| 115 | Good | Good | Good | Good |
| 116 | Good | Good | Good | Good |
| 117 | Good | Good | Good | Good |
| 118 | Good | Good | Good | Good |
| 119 | Good | Good | Good | Good |
| 120 | Good | Good | Good | Good |
| 121 | Good | Good | Good | Good |
| 122 | Good | Good | Good | Good |
| 123 | Good | Good | Good | Good |
| 124 | Good | Good | Good | Good |
| 125 | Good | Good | Good | Good |

**TABLE 22**

| Specimen No. | Melting during homogenization | Erosion in unprocessed area | Erosion in low-processed area | Elongation |
|---|---|---|---|---|
| 126 | Good | Good | Good | Good |
| 127 | Good | Good | Good | Good |
| 128 | Good | Good | Good | Good |
| 129 | Good | Good | Good | Good |
| 130 | Good | Good | Good | Good |
| 131 | Good | Good | Good | Good |
| 132 | Good | Good | Good | Good |
| 133 | Good | Good | Good | Good |
| 134 | Good | Good | Good | Good |
| 135 | Good | Good | Good | Good |
| 136 | Good | Good | Good | Good |
| 137 | Good | Good | Good | Good |
| 138 | Good | Good | Good | Good |
| 139 | Good | Good | Good | Good |
| 140 | Good | Good | Good | Good |
| 141 | Good | Good | Good | Good |
| 142 | Good | Good | Good | Good |
| 143 | Good | Good | Good | Good |
| 144 | Good | Good | Good | Good |
| 145 | Good | Good | Good | Good |
| 146 | Good | Good | Good | Good |
| 147 | Good | Good | Good | Good |
| 148 | Good | Good | Good | Good |
| 149 | Good | Good | Good | Good |
| 150 | Good | Good | Good | Good |

**TABLE 23**

| Specimen No. | Melting during homogenization | Erosion in unprocessed area | Erosion in low-processed area | Elongation |
|---|---|---|---|---|
| 151 | Good | Good | Good | Bad |
| 152 | Bad | - | - | - |
| 153 | Good | Good | Bad | Good |
| 154 | Good | Good | Good | Good |
| 155 | Good | Bad | Good | Good |
| 156 | Good | Good | Bad | Good |
| 157 | Good | Good | Good | Bad |
| 158 | Good | Good | Bad | Good |
| 159 | Good | Good | Good | Bad |
| 160 | Bad | - | - | - |
| 161 | Good | Good | Bad | Good |
| 162 | Good | Good | Good | Good |
| 163 | Good | Bad | Good | Good |
| 164 | Good | Good | Bad | Good |
| 165 | Good | Good | Good | Bad |
| 166 | Good | Good | Bad | Good |
| 167 | Good | Good | Good | Bad |
| 168 | Bad | - | - | - |
| 169 | Good | Good | Bad | Good |
| 170 | Good | Good | Good | Good |
| 171 | Good | Bad | Good | Good |
| 172 | Good | Good | Bad | Good |
| 173 | Good | Good | Good | Bad |
| 174 | Good | Good | Bad | Good |
| 175 | Good | Good | Good | Bad |

**TABLE 24**

| Specimen No. | Melting during homogenization | Erosion in unprocessed area | Erosion in low-processed area | Elongation |
|---|---|---|---|---|
| 176 | Bad | - | - | - |
| 177 | Good | Good | Bad | Good |
| 178 | Good | Good | Good | Good |
| 179 | Good | Bad | Good | Good |
| 180 | Good | Good | Bad | Good |
| 181 | Good | Good | Good | Bad |
| 182 | Good | Good | Bad | Good |
| 183 | Good | Good | Good | Bad |
| 184 | Bad | - | - | - |
| 185 | Good | Good | Bad | Good |
| 186 | Good | Good | Good | Good |
| 187 | Good | Bad | Good | Good |
| 188 | Good | Good | Bad | Good |
| 189 | Good | Good | Good | Bad |
| 190 | Good | Good | Bad | Good |
| 191 | Good | Good | Good | Bad |
| 192 | Bad | - | - | - |
| 193 | Good | Good | Bad | Good |
| 194 | Good | Good | Good | Good |
| 195 | Good | Bad | Good | Good |
| 196 | Good | Good | Bad | Good |
| 197 | Good | Good | Good | Bad |
| 198 | Good | Good | Bad | Good |
| 199 | Good | Good | Good | Bad |
| 200 | Bad | - | - | - |

The test results are shown in Tables 21 to 24. As shown in Tables 21 and 22, the specimens 101 to 150 according to the present invention exhibited excellent elongation, were not melted after homogenization, and did not show erosion in the unprocessed area and the low-processed area.

As shown in Tables 23 and 24, minute compounds that inhibit recrystallization precipitated in the specimens 151, 156, 158, 165, 167, 173, 175, 181, 183, 189, 191, 197, and 199 due to a low homogenization temperature. Moreover, the strain before final annealing could not be recovered due to a low final annealing temperature so that the elongation of the material decreased.

The specimens 152, 160, 168, 176, 184, 192, and 200 showed local melting due to a high homogenization temperature. Moreover, cracks occurred during rolling (i.e., a specimen could not be produced). The specimens 153, 161, 119, 177, 185, and 193 were completely softened during final annealing due to a low process annealing temperature. As a result, the low-processed area was eroded to a large extent during brazing. Since the specimens 154, 162, 170, 178, 186, and 194 were subjected to homogenization, process annealing, and final annealing at a high temperature, the energy cost increased to an impractical level.

The specimens 155, 163, 171, 179, 187, and 195 were not completely recrystallized during brazing due to a low rolling reduction rate during final cold rolling. As a result, erosion occurred to a large extent. The specimens 156, 158, 164, 166, 172, 174, 180, 182, 188, 190, 196, and 198 were completely softened due to a low rolling reduction rate during final cold rolling and a high final annealing temperature. As a result, the low-processed area was eroded to a large extent during brazing.

Obviously, numerous modifications and variations of the present invention are possible in the light of the above teachings. It is therefore to be understood that within the scope of the appended claims, the invention may be practised otherwise than as specifically described herein.

## Claims

1. An aluminum alloy clad sheet suitable for forming a refrigerant passage of a heat exchanger, the aluminum alloy clad sheet comprising a core material, a cladding material 1, and a cladding material 2, one side and the other side of the core material being respectively clad with the cladding material 1 and the cladding material 2,
- the core material consisting of 0.5 to 1.2% (mass%, hereinafter the same) of Si, 0.2 to 1.0% of Cu, and 1.0 to 1.8% of Mn, optionally at least one element selected from the group consisting of 0.3% or less of Cr, 0.3% or less of Zr and 0.5% or less of Mg, with the balance being Al and unavoidable impurities,
- the cladding material 1 consisting of 3 to 6% of Si, 2 to 8% of Zn, and at least one of 0.3 to 1.8% of Mn and 0.05 to 0.3% of Ti, optionally at least one element selected from the group consisting of 0.005 to 0.05% of Sr, 0.3% or less of Cr, 0.3% or less of Zr, 0.001 to 0.1% of In, 0.001 to 0.1% of Sn and Ni less than 0.05%, with the balance being Al and unavoidable impurities, and
- the cladding material 2 consisting of 6 to 13% of Si, optionally at least one element selected from the group consisting of 0.005 to 0.05% of Sr and 0.1 to 0.5% of Cu, with the balance being Al and unavoidable impurities,
- the cladding material 1 being positioned opposite to the refrigerant passage during use.

2. An aluminum alloy clad sheet suitable for forming a refrigerant passage of a heat exchanger, the aluminum alloy clad sheet comprising a core material and a cladding material 1, one side of the core material being clad with the cladding material 1,
- the core material consisting of 0.5 to 1.2% of Si, 0.2 to 1.0% of Cu, and 1.0 to 1.8% of Mn, optionally at least one element selected from the group consisting of 0.3% or less of Cr, 0.3% or less of Zr and 0.5% or less of Mg, with the balance being Al and unavoidable impurities, and
- the cladding material 1 consisting of 3 to 6% of Si, 2 to 8% of Zn, and at least one of 0.3 to 1.8% of Mn and 0.05 to 0.3% of Ti, optionally at least one element selected from the group consisting of 0.005 to 0.05% of Sr, 0.3% or less of Cr,0.3% or less of Zr, 0.001 to 0.1% of In,0.001 to 0.1% of Sn and Ni less than 0.05%, with the balance being Al and unavoidable impurities,
- the cladding material 1 being positioned opposite to the refrigerant passage during use.

3. A method of producing the aluminum alloy clad sheet according to claims 1 or 2, the method comprising:
- homogenizing an ingot of an aluminum alloy that forms the core material at 550 to 620°C for 2 to 20 hours;
- cladding the ingot with an aluminum alloy that forms the cladding material 1 or cladding the ingot with an aluminum alloy that forms the cladding material 1 and an aluminum alloy that forms the cladding material 2;
- hot-rolling the resulting product;
- cold-rolling the hot-rolled product, the hot-rolled product being heated at 300 to 400°C for 2 to 5 hours during the cold-rolling so that the core material has a recrystallized structure;
- cold-rolling the resulting product to a final thickness at a rolling reduction rate of 10 to 40%; and
- subjecting the resulting product to a recovery treatment by heating the product at 200 to 450°C for 2 to 5 hours.

## Patentansprüche

1. Plattiertes Aluminiumlegierungsblech, das zur Bildung eines Kältemittelkanals eines Wärmetauschers geeignet ist, wobei das plattierte Aluminiumlegierungsblech ein Kernmaterial, ein Plattierungsmaterial 1 und ein Plattierungsmaterial 2 umfasst, eine Seite des Kernmaterials mit dem Plattierungsmaterial 1 und die andere Seite des Kernmaterials mit dem Plattierungsmaterial 2 plattiert ist,
- das Kernmaterial aus 0,5 bis 1,2 % (Massen%, im Folgenden ebenfalls Massen%) Si, 0,2 bis 1,0 % Cu und 1,0 bis 1,8 % Mn sowie wahlweise wenigstens einem Element besteht, das aus der Gruppe bestehend aus 0,3 %, oder weniger, Cr, 0,3 %, oder weniger, Zr und 0,5 %, oder weniger, Mg ausgewählt ist, wobei der Rest aus Al und unvermeidbaren Verunreinigungen besteht,
- das Plattierungsmaterial 1 aus 3 bis 6 % Si, 2 bis 8 % Zn und wenigstens einem der Elemente 0,3 bis 1,8 % Mn und 0,05 bis 0,3 % Ti sowie wahlweise wenigstens einem Element besteht, das aus der Gruppe bestehend aus 0,005 bis 0,05 % Sr, 0,3 %, oder weniger, Cr, 0,3 %, oder weniger, Zr, 0,001 bis 0,1 % In, 0,001 bis 0,1 % Sn und weniger als 0,05 % Ni ausgewählt ist, wobei der Rest aus Al und unvermeidbaren Verunreinigungen besteht, und
- das Plattierungsmaterial 2 aus 6 bis 13 % Si und wahlweise wenigstens einem Element besteht, das aus der Gruppe bestehend aus 0,005 bis 0,05 % Sr und 0,1 bis 0,5 % Cu ausgewählt ist, wobei der Rest aus Al und unvermeidbaren Verunreinigungen besteht,
- das Plattierungsmaterial 1 im Gebrauch auf der dem Kältemittelkanal entgegengesetzten Seite angeordnet ist.

2. Plattiertes Aluminiumlegierungsblech, das zur Bildung eines Kältemittelkanals eines Wärmetauschers geeignet ist, wobei das plattierte Aluminiumlegierungsblech ein Kernmaterial und ein Plattierungsmaterial 1 umfasst, eine Seite des Kernmaterials mit dem Plattierungsmaterial 1 plattiert ist,
- das Kernmaterial aus 0,5 bis 1,2 % Si, 0,2 bis 1,0 % Cu und 1,0 bis 1,8 % Mn und wahlweise wenigstens einem Element besteht, das aus der Gruppe bestehend aus 0,3 %, oder weniger, Cr, 0,3 %, oder weniger, Zr und 0,5% oder weniger Mg ausgewählt ist, wobei der Rest aus Al und unvermeidbaren Verunreinigungen besteht, und
- das Plattierungsmaterial 1 aus 3 bis 6 % Si, 2 bis 8 % Zn und wenigstens einem der Elemente 0,3 bis 1,8 % Mn und 0,05 bis 0,3 % Ti sowie wahlweise wenigstens einem Element besteht, das aus der Gruppe bestehend aus 0,005 bis 0,05 % Sr, 0,3 %, oder weniger, Cr, 0,3 %, oder weniger, Zr, 0,001 bis 0,1 % In, 0,001 bis 0,1 % Sn und weniger als 0,05 % Ni ausgewählt ist, wobei der Rest aus Al und unvermeidbaren Verunreinigungen besteht, und
- das Plattierungsmaterial 1 im Gebrauch auf der dem Kältemittelkanal entgegengesetzten Seite angeordnet ist.

3. Verfahren zur Herstellung des plattierten Aluminiumlegierungsbleches nach Anspruch 1 oder 2, wobei das Verfahren umfasst:
- Homogenisierung eines Blocks aus einer das Kernmaterial bildenden Aluminiumlegierung bei 550 bis 620 °C, für einen Zeitraum von 2 bis 20 Stunden;
- Plattieren des Blocks mit einer das Plattierungsmaterial 1 bildenden Aluminiumlegierung oder Plattieren des Blocks mit einer das Plattierungsmaterial 1 bildenden Aluminiumlegierung und einer das Plattierungsmaterial 2 bildenden Aluminiumlegierung,
- Warmwalzen des erhaltenen Produkts,
- Kaltwalzen des warmgewalzten Produkts, wobei das warmgewalzte Produkt bei 300 bis 400 °C für einen Zeitraum von 2 bis 5 Stunden während des Kaltwalzens erwärmt wird, so dass das Kernmaterial eine rekristallisierte Struktur aufweist,
- Kaltwalzen des erhaltenen Produkts bis zu einer Enddicke, bei einem Abwalzgrad von 10 bis 40 %, und
- das erhaltene Produkt durch Erhitzen des Produktes bei 200 bis 450 °C für einen Zeitraum von 2 bis 5 Stunden einer Erholungsbehandlung unterziehen.

## Revendications

1. Tôle plaquée d'un alliage d'aluminium appropriée pour former un passage de réfrigérant d'un échangeur de chaleur, la tôle plaquée d'un alliage d'aluminium comprenant un matériau de coeur, un matériau de placage 1, et un matériau de placage 2, un côté et l'autre côté du matériau de coeur étant respectivement plaqués avec le matériau de placage 1 et le matériau de placage 2,
- le matériau de coeur consistant en 0,5 à 1,2% (% en masse, de la même manière ci-après) de Si, 0,2 à 1,0% de Cu, et 1,0 à 1,8% de Mn, facultativement au moins un élément choisi parmi le groupe consistant en 0,3% ou moins de Cr, 0,3% ou moins de Zr et 0,5% ou moins de Mg, le reste étant Al et des impuretés inévitables,
- le matériau de placage 1 consistant en 3 à 6% de Si, 2 à 8% de Zn, et au moins un de 0,3 à 1,8% de Mn et 0,05 à 0,3% de Ti, facultativement au moins un élément choisi parmi le groupe consistant en 0,005 à 0,05% de Sr, 0,3% ou moins de Cr, 0,3% ou moins de Zr, 0,001 à 0,1% d'In, 0,001 à 0,1% de Sn et Ni à hauteur de moins de 0,05%, le reste étant Al et des impuretés inévitables, et
- le matériau de placage 2 consistant en 6 à 13% de Si, facultativement au moins un élément choisi parmi le groupe consistant en 0,005 à 0,05% de Sr et 0,1 à 0,5% de Cu, le reste étant Al et des impuretés inévitables,
- le matériau de placage 1 étant positionné à l'opposé du passage de réfrigérant à l'usage.

2. Tôle plaquée d'un alliage d'aluminium appropriée pour former un passage de réfrigérant d'un échangeur de chaleur, la tôle plaquée d'un alliage d'aluminium comprenant un matériau de coeur et un matériau de placage 1, un côté du matériau de coeur étant plaqué avec le matériau de placage 1,
- le matériau de coeur consistant en 0,5 à 1,2% de Si, 0,2 à 1,0% de Cu, et 1,0 à 1,8% de Mn, facultativement au moins un élément choisi parmi le groupe consistant en 0,3% ou moins de Cr, 0,3% ou moins de Zr et 0,5% ou moins de Mg, le reste étant Al et des impuretés inévitables, et
- le matériau de placage 1 consistant en 3 à 6% de Si, 2 à 8% de Zn, et au moins un de 0,3 à 1,8% de Mn et 0,05 à 0,3% de Ti, facultativement au moins un élément choisi parmi le groupe consistant en 0,005 à 0,05% de Sr, 0,3% ou moins de Cr, 0,3% ou moins de Zr, 0,001 à 0,1% d'In, 0,001 à 0,1% de Sn et Ni à hauteur de moins de 0,05%, le reste étant Al et des impuretés inévitables,
- le matériau de placage 1 étant positionné à l'opposé du passage de réfrigérant à l'usage.

3. Procédé de production de la tôle plaquée d'un alliage d'aluminium selon les revendications 1 ou 2, le procédé comprenant :
- l'homogénéisation d'un lingot d'un alliage d'aluminium qui forme le matériau de coeur à 550 à 620°C pendant 2 à 20 heures ;
- le placage du lingot avec un alliage d'aluminium qui forme le matériau de placage 1 ou le placage du lingot avec un alliage d'aluminium qui forme le matériau de placage 1 et un alliage d'aluminium qui forme le matériau de placage 2 ;
- le laminage à chaud du produit résultant ;
- le laminage à froid du produit laminé à chaud, le produit laminé à chaud étant chauffé à 300 à 400°C pendant 2 à 5 heures pendant le laminage à froid de telle sorte que le matériau de coeur a une structure recristallisée ;
- le laminage à froid du produit résultant à une épaisseur finale à un taux de réduction par laminage de 10 à 40% ; et
- la soumission du produit résultant à un traitement de restauration en chauffant le produit à 200 à 450°C pendant 2 à 5 heures.
